# EUROPÄISCHE PATENTSCHRIFT

(11) **EP 1 886 223 B1**
(45) Veröffentlichungstag und Bekanntmachung des Hinweises auf die Patenterteilung: **14.10.2009**
(21) Anmeldenummer: 06753235.8
(22) Anmeldetag: 02.06.2006
(51) Int. Cl.: G06F 15/02, G01C 22/00

(54) **DATENTRANSFERVORRICHTUNG FÜR EINEN FAHRRADCOMPUTER ODER DGL.; COMPUTER FÜR FAHRRAD, INLINER, WANDERSTOCK ODER DGL.; VERFAHREN ZUR EINSTELLUNG UND/ODER AKTUALISIERUNG EINES FAHRRADCOMPUTERS ODER DGL.**
DATA TRANSFER DEVICE FOR A BICYCLE COMPUTER OR SIMILAR COMPUTER FOR A BICYCLE INLINE SKATES WALKING STICK OR SIMILAR AND METHOD FOR SETTING AND/OR UPDATING A BICYCLE COMPUTER OR SIMILAR
DISPOSITIF DE TRANSFERT DE DONNEES POUR UN ORDINATEUR POUR BICYCLETTE OU ANALOGUE, ORDINATEUR POUR BICYCLETTE, PATINS EN LIGNE, BATON DE MARCHE OU ANALOGUE, PROCEDE DE REGLAGE ET / OU DE MISE A JOUR D'UN ORDINATEUR POUR BICYCLETTE OU ANALOGUE

(30) Priorität: 03.06.2005 DE 102005025574
(43) Veröffentlichungstag der Anmeldung: 13.02.2008
(73) Patentinhaber: Sigma Elektro GmbH, 67433 Neustadt/ Weinstrasse (DE)
(72) Erfinder: SCHENDEL, Klaus, 67433 Neustadt/Weinstrasse (DE)
(74) Vertreter: Wüstefeld, Regine Marie
(86) Internationale Anmeldenummer: PCT/DE2006/000960
(87) Internationale Veröffentlichungsnummer: WO 2006/128452

(56) Entgegenhaltungen:
- EP-A- 0 638 336
- WO-A-20/04087490
- US-A- 5 450 325
- ANONYMOUS: "Polar S520/S510 User's manual" INTERNET ARTICLE, [Online] 2002, Seiten 1-112, XP002400802 Gefunden im Internet: URL:http://www.polarusa.com/manuals/s520.p df> [gefunden am 2006-09-28]

## Beschreibung

Die vorliegende Erfindung betrifft eine Datentransfervorrichtung für einen Fahrradcomputer oder dergleichen, umfassend Datenübertragungsmittel, eine Datenverarbeitungseinrichtung zum Sammeln von Daten gemäß Auswahl einer Funktion entsprechend einem bestimmten Kriterium und Eingabe eines Wertes, Eingabemittel, Auswahlmittel und eine Anzeigeeinrichtung, einen Computer für Fahrrad, Inliner, Wanderstock, Pulsuhr oder dergleichen, der mit der Datentransfervorrichtung zusammenwirkt und ein Verfahren zur Einstellung und / oder Aktualisierung eines Fahrradcomputers oder dergleichen mittels der Datentransfervorrichtung.

Fahrradcomputer, Inlinercomputer bzw. Rollschuhcomputer oder auch Wanderstockcomputer bzw. Computer für Nordic Walking oder auch für einen Skistock sind aus der Praxis bekannt. Seit neuerer Zeit treten auch Computer hinzu, die an einem Halsband oder Lanyard getragen Leistungsdaten aufnehmen, berechnen und anzeigen. Die Information des Sportlers über seine erbrachte Leistung, insbesondere die zurückgelegte Wegstrecke, die Geschwindigkeit, gehört heute zum Standard - auch bei Freizeitsportlern.

Die Programmierung von Fahrradcomputern und dergleichen ist aufgrund der kleinen Baugröße schwierig und oftmals nur unter Benutzung eines spitzen Gegenstandes zum Drücken eines innerhalb des Gehäuses versenkten Kontaktstiftes zu erreichen. Entweder muss der Verkäufer des Fahrradcomputers aufwendig und langwierig die Grundeinstellung beim Verkauf vornehmen, wobei er sich auch noch mit der meist umfangreichen Betriebsanleitung auseinandersetzen muss, oder der Nutzer betreibt den lästigen Aufwand. Noch schwieriger ist die Eingabe bereits bestehender Kilometerstände oder abgeleisteter Zeitvolumen auf einen neuen Fahrradcomputer.

Aus der WO 2004/087490 A ist ein Informationssystem für ein Fahrzeug mit zwei miteinander kommunizierenden Baueinheiten bekannt. Dort wird bemängelt, dass passende Zubehörteile, wie Lichtsysteme, Fahrradcomputer zur Anzeige der Geschwindigkeit passend nur in Verbindung mit dem gekauften Fahrrad zu bekommen sind. Wenn der Nutzer ein einzelnes Zubehörteil verwendet, ist ein großer Aufwand erforderlich, dieses sicher an das Fahrrad zu montieren. Jedes Zubehörteil hat seine eigene separate Batterie oder seine eigenen Energiequelle. Außerdem sei die Kabelführung zwischen den verschiedenen Komponenten unübersichtlich. Zur Lösung dieses Problem wird ein Informationssystem vorgeschlagen, das über eine Speichereinheit einerseits und eine Eingabeeinrichtung mit einem Display andererseits verfügt. Die Eingabeeinrichtung kann das Signal der Speichereinheit annehmen und die erhaltenen Daten im Display anzeigen. Es wird lediglich ein Datentransfer zwischen Baueinheiten hergestellt, die von vorn herein aufeinander abgestimmt sind.

Ausgehend von dem bekannten Stand der Technik liegt der Erfindung die Aufgabe zugrunde, eine Datentransfervorrichtung, einen mit der Datentransfervorrichtung zusammenwirkenden Fahrradcomputer, Inlinercomputer, Wanderstockcomputer, Pulsuhrcomputer oder dgl. und ein Verfahren unter Verwendung der Datentransfervorrichtung anzugeben, wobei der Fahrradcomputer oder dgl. einfach und schnell entsprechend der Nutzerbedürfnisse einstellbar und / oder aktualisierbar ist.

Die voranstehende Aufgabe wird im Hinblick auf die Datentransfervorrichtung durch die Merkmale des Patentanspruches 1 gelöst. Danach ist eine Datentransfervorrichtung der in Rede stehenden Art dadurch ausgestaltet und weitergebildet, dass die Datenverarbeitungseinrichtung über einen Speicher verfügt, der Daten zu verschiedenen Typen von Fahrradcomputern oder dergleichen enthält und dass die Datenverarbeitungseinrichtung über die Eingabemittel zur Auswahl des für den jeweiligen Computertypen zutreffenden Übertragungsmittels programmierbar ist.

Die voranstehende Aufgabe wird im Hinblick auf den mit der Datentransfervorrichtung zusammenwirkenden Computer für ein Fahrrad, Inliner, Wanderstock, Nordic Walking Stock, Skistock, Pulsuhr oder dergleichen des weiteren durch die Merkmale des Patentanspruches 16 gelöst. Danach ist ein aus der Praxis bekannter Computer zur Ermittlung von Leistungsdaten eines Sportlers mit Mess-, Datenverarbeitungs- und Anzeigeeinrichtung dadurch weitergebildet, dass Datenübertragungsmittel vorgesehen sind, die mit den Datenübertragungsmitteln der erfindungsgemäßen Datentransfervorrichtung zusammenwirken und dass eine Kennung bzgl. des Computertyps vorgesehen ist, die von der Datentransfervorrichtung erkennbar ist und die Qualifizierung des Computertyps innerhalb des Speichers der Datenverarbeitungseinrichtung der Datentransfervorrichtung automatisch einleitet.

Ausgangspunkt der Erfindung ist die Überlegung, dass mittels einer leicht bedienbaren Datentransfervorrichtung eine einfache und schnelle Einstellung eines Fahrradcomputers oder dergleichen zu erreichen ist. Über Eingabe- und Auswahlmittel können Daten in die Datenverarbeitungsanlage eingespeist werden, die schließlich durch die Datenübertragungsmittel zu dem mit korrespondierenden Datenübertragungsmitteln ausgestatteten Fahrradcomputer oder dergleichen übertragen werden. Durch die erfindungsgemäße Datentransfervorrichtung wird die Möglichkeit eröffnet, auch bereits bestehende Daten eines ausrangierten Fahrradcomputers auf den neuen Fahrradcomputer zu übertragen. Die bereits zurückgelegten Kilometer, die bisherige Durchschnittsgeschwindigkeit oder das bisher abgeleitete Zeitvolumen gehen damit nicht verloren und können im neuen Fahrradcomputer Berücksichtigung finden. Dadurch ist bspw. Aufstellung einer Jahres-Leistungsbilanz auch möglich, wenn der Fahrradcomputer ausgewechselt wird. Zunächst ist erkannt worden, dass eine einfache und schnelle Einstellung eines Computers zu erreichen ist, wenn der Computertyp festgestellt werden kann. Efindungsgemäß verfügt die Datenverarbeitungseinrichtung der Datentransfervorrichtung über einen Speicher, der Daten zu den verschiedenen Typen von Fahrradcomputern oder dergleichen enthält. Der Verkäufer oder Nutzer kann über die Eingabemittel den Typ des kompatiblen Computers, bspw. eines Fahrradcomputers, eingeben und so die Datenverarbeitungseinrichtung der Datentransfervorrichtung hinsichtlich der Auswahl des für den jeweiligen Computertypen zutreffenden Übertragungsmittels programmieren.

Im Hinblick auf den Computer ist erfindungsgemäß erkannt worden, diesen mit einer Kennung auszustatten, die von der Datentransfervorrichtung direkt erkannt wird und die Abfrage des Computertyps innerhalb des Speichers der Datenverarbeitungseinrichtung der Datentransfervorrichtung automatisch einleitet. Auf diese Weise wird die Bedienung sehr vereinfacht und verkürzt und der Verkäufer muss nicht einmal mehr den Typ des kompatiblen Computers in die Datentransfervorrichtung eingeben.

Gemäß einer einfachen und robusten Ausführungsform könnten die Datenübertragungsmittel in Form von zwei metallischen Steckkontakten ausgebildet sein, die mit den entsprechenden Kontaktstiften des Fahrradcomputers oder dergleichen zusammenwirken. Alternativ könnte auch berührungslose Technik mittels Signalübertragung zwischen dem als Sender vorliegenden Datenübertragungsmittel dem entsprechenden Empfänger des Fahrradcomputers oder dergleichen zum Einsatz kommen. Der Fahrradcomputer, Inlinercomputer oder Wanderstockcomputer weist also seinerseits Datenübertragungsmittel auf, die mit denen der Datentransfervorrichtung korrespondieren. Eine weitere denkbare Fortbildung könnte darin bestehen, dass ein bereits benutzter, ggf. auszurangierender, Fahrradcomputer oder dergleichen nicht nur über einen Empfänger, sondern auch über einen Sender verfügt, der an einen Empfänger in der Datentransfervorrichtung alte Daten sendet, so dass diese dann in einem nächsten Schritt an einen neuen Fahrradcomputer oder dergleichen übertragen werden können.

Ähnlich wie bei einem für sich gesehen bekannten Fahrradcomputer könnte auch die Datenverarbeitungseinrichtung der Datentransfervorrichtung über Auswahlmittel mit programmierbaren Funktionen gemäß bestimmten Kriterien verfügen. Bei den Kriterien könnte es sich um die Uhrzeit und / oder um die Sprache, die auf der Anzeigeeinrichtung erscheinen soll, handeln. Des weiteren könnte es sich bei einem Kriterium um die Wegstreckenmesseinheit handeln, die in Kilometern oder Meilen einstellbar sein könnte. Ein weiteres Kriterium könnte sich auf die Geschwindigkeit beziehen. Bei einem als Pulsuhr vorliegenden Computer könnten sich die Kriterien auf Daten beziehen, die Körperfunktionen betreffen, wie bspw. die Herzfrequenz oder auch die Temperatur.

Im Hinblick auf die Aktualisierung eines neuen Fahrradcomputers oder dergleichen mit den Daten eines bereits benutzten, ggf. auszurangierenden Fahrradcomputers oder dergleichen könnte es sich bei weiteren Kriterien um einen bereits erreichten Stand an zurückgelegter Wegstrecke und / oder um ein bereits erreichtes Zeitvolumen an sportlicher Betätigung und / oder eine Durchschnittsgeschwindigkeit handeln. Ebenso könnten sich bei einem als Pulsuhr vorliegenden auszurangierenden Computer weitere Kriterien auf bereits vorhandene physische Daten des Sportlers aus der Vergangenheit beziehen. Die bereits vorhandenen Daten des auszurangierenden Computers werden in einfachster Weise über die Datentransfermittel in die Datentransfervorrichtung eingespeist und von dort auf den neuen Computer übertragen.

Bezogen auf ein speziell für den Fahrradcomputer zutreffendes Kriterium könnte die Radgröße von Bedeutung sein. Entsprechend könnte bei einem Inlinercomputer das Kriterium der Rollengröße eingegeben werden.

Grundsätzlich könnten die Daten für die Auswahlmittel gemäß den bestimmten Kriterien über die Eingabemittel programmierbar sein.

Die Eingabemittel der erfindungsgemäßen Datentransfervorrichtung könnten im Hinblick auf eine bequeme Handhabbarkeit in Form von Tasten vorliegen, die mit bestimmten Funktionen belegt sind. Es kommen Zifferntasten zur Eingabe von Werten, sowie Navigationstasten im Hinblick auf die Auswahlmittel mit verschiedenen Funktionen und die Auswahl dortiger Werte in Betracht. Des weiteren könnte eine An- und Ausschalttaste, eine Korrekturtaste und eine Bestätigungstaste hinsichtlich Eingabe oder Auswahl vorgesehen sein. Die Eingabemittel könnten auch in Form eines Touchscreens realisiert werden. Außerdem könnten die Eingabemittel auch in Form von Multifunktionstasten vorliegen und die Eingabe unterschiedlicher Daten über unterschiedliche Betätigungsdauern erfolgen.

Mittels der Bestätigungstaste könnte die Einspeisung der nutzerrelevanten Daten in die Datenverarbeitungseinrichtung abgeschlossen werden, wobei auch die Aktivierung der Datenübertragungsmittel erfolgt. Bei einer besonders bevorzugten Ausführungsform der erfindungsgemäßen Datentransfervorrichtung könnten mittels der Bestätigungstaste sowohl die Datenübertragungsmittel der Datentransfervorrichtung als auch die Datenübertragungsmittel des kompatiblen Fahrradcomputers oder dgl. aktivierbar sein.

Weitere Funktionen, die in der Datenverarbeitungseinrichtung der erfindungsgemäßen Datentransfervorrichtung enthalten sein könnten, beziehen sich auf eine Selbstwählfunktion (Auto Mode), die aktiviert werden kann, auf die selbsttätige Anzeige, dass- Batterien gewechselt werden müssen, und auf eine Funkuhr, die das Einstellen der Uhrzeit überflüssig macht.

Zudem könnte vor allem bei erfindungsgemäßen Datentransfervorrichtungen, die für Händler vorgesehen sind, ein Speicherplatz zum Zwecke der statistischen Erfassung der Anzahl von eingestellten Fahrradcomputem, Inlinercomputern, Nordic Walking Computern oder dergleichen vorgesehen sein.

Bezüglich des erfindungsgemäßen Computers ist eine weitere Ausführungsform vorgesehen, die sich auf die Ermittlung, Verarbeitung und Anzeige körperliche Leistungsdaten eines Sportlers bezieht. Dabei geht es darum, dass der Computer Bestandteil einer Pulsuhr ist. Der Computer der Pulsuhr wirkt mit Messsensoren zusammen. Es erfolgt insbesondere die Messung der Herzfrequenz des Sportlers, die Erfassung, Auswertung und Anzeige der Messdaten. Auch bei Pulsuhren ist insbesondere durch den Händler eine Grundeinstellung bspw. hinsichtlich des Datums und der Uhrzeit vorzunehmen, was durch das Zusammenwirken eines als Pulsuhr vorliegenden erfindungsgemäßen computers mit einer erfindungsgemäßen Datentransfervorrichtung erleichtert wird. Außerdem besteht die Möglichkeit - wie beim Fahrradcomputer, Inlinercomputer, Wanderstockcomputer auch - eine Übernahme der Daten einer ausgedienten Pulsuhr durch die Datentransfermittel zu übernehmen und einer neun Pulsuhr zuzuführen, so dass körperbezogene Daten kontinuierlich darstellbar sind und vergangene Gesundheitsstadien in eine Auswertung einbezogen werden können. Auch die körperliche Leistungssteigerung, die Verbesserung der Fitness spielt eine zunehmende Rolle, so dass Bedarf für dieses Ausführungsbeispiel nicht nur für einen Händler für Pulsuhren, sondern auch für den Sportler selbst besteht.

Die eingangs formulierte Aufgabe wird des weiteren durch die Merkmale des Verfahrensanspruches 19 gelöst. Danach umfasst das erfindungsgemäße Verfahren zur Einstellung und/oder Aktualisierung eines Fahrradcomputers oder dergleichen folgende Schritte:
- Vorsehen einer Datentransfervorrichtung nach einem der Ansprüche 1 bis 15,
- Auswahl von Funktionen und Eingabe von Werten gemäß Nutzerkriterien,
- Auslösen der Datenübertragung von der Datentransfervorrichtung zum Fahrradcomputer oder dergleichen gemäß einem der Ansprüche 16 bis 18,
- Empfangen, internes Verarbeiten und Anzeigen der eingestellten und / oder aktualisierten Daten auf dem Fahrradcomputer oder dergleichen.

Erfindungsgemäß ist wie auch hinsichtlich der Datentransfervorrichtung und dem kompatiblen Computer für Fahrräder, Inliner, Nordic Walking oder dergleichen erkannt worden, dass eine Vereinfachung der Einstellung desselben erfolgt, indem Funktionen an einer Datentransfervorrichtung ausgewählt und Daten in diese eingegeben werden und dann eine Einstellung des Fahrradcomputers über die Übertragungsmittel erfolgt. Diese Vorgehensweise ist bei weitem einfacher, also auch für einen Laien ausführbar, schneller und zuverlässiger als die schwierige Programmierung des Fahrradcomputers gemäß dem Stand der Technik. Ein Verkäufer oder Nutzer muss einfach nur die Datentransfervorrichtung, in der tagesaktuelle Daten, wie Uhrzeit, Datum, bereits enthalten sein können, die nutzerrelevanten Daten einstellen und diese übertragen. Dabei kann es Korrekturmöglichkeiten geben sowie die Möglichkeit, Altdaten einzuspeisen und zu übertragen. Sollte der Computer keine Kennung aufweisen, die die Einstellung auf den Computertyp automatisch einleitet, ist natürlich die manuelle Einstellung der Datentransfervorrichtung auf den jeweiligen Computertyp erforderlich.

Die Einspeisung der Altdaten in die Datentransfervorrichtung kann berührungslos oder über die in Form von Kontaktstiften vorliegenden Übertragungsmittel oder über die Eingabemittel erfolgen.

Im Hinblick auf weitere vorteilhafte Ausgestaltungen des erfindungsgemäßen Verfahrens wird auf die allgemeine Beschreibung der erfindungsgemäßen Datentransfervorrichtung oder den erfindungsgemäß kompatiblen Fahrradcomputer oder dergleichen verwiesen, zumal dort Merkmale erläutert sind, die für das Verfahren auch relevant sind.

Es gibt nun verschiedene Möglichkeiten, die Lehre der vorliegenden Erfindung in vorteilhafter Weise auszugestalten und weiterzubilden. Dazu ist einerseits auf die Patentansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung anhand der Zeichnung werden im allgemeinen bevorzugte Ausgestaltungen und Weiterbildungen der Lehre erläutert. In der Zeichnung zeigen
- Fig. 1: in prinzipieller Blockschaltbildform eine allgemeine Anordnung eines Ausführungsbeispiels einer erfindungsgemäßen Datentransfervorrichtung in Zusammenwirken mit einem Fahrradcomputer und
- Fig. 2: in schematischer Darstellung, Eingabe- und Auswahlmittel sowie Anzeigeeinrichtung eines Ausführungsbeispiels einer erfindungsgemäßen Datentransfervorrichtung, betreffend bei
Fig. 2 A die Auswahl des Fahrradcomputertyps,
Fig. 2 B die Auswahl der Längenmesseinheit,
Fig. 2 C die Auswahl der Radgröße,
Fig. 2 D die Eingabe der Uhrzeit,
Fig. 2 E die Auswahl, ob selbständige Auswahl (AUTO MODE) erfolgen soll oder nicht - AN / AUS,
Fig. 2 F die Eingabe der bereits gefahrenen Kilometer
Fig. 2 G die Auswahl der Bestätigung - JA / NEIN
Fig. 2 H Übertragungsfortschritt

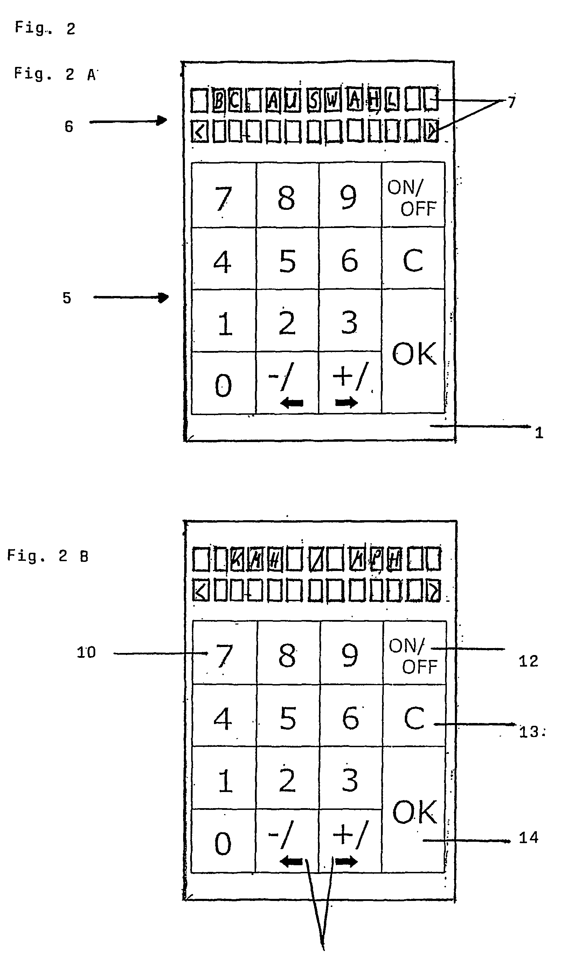

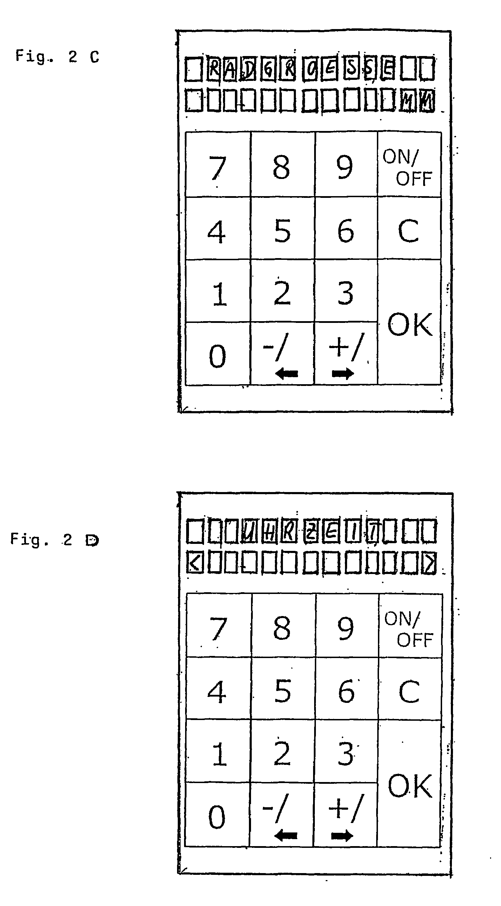

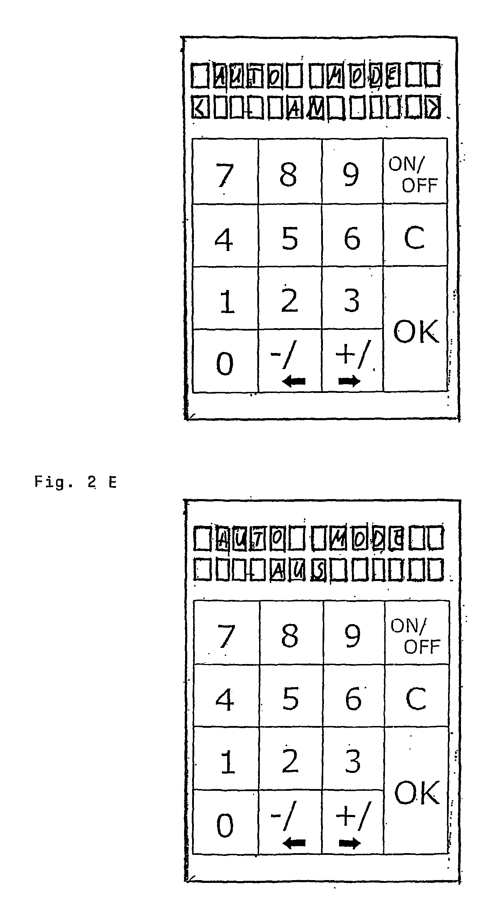

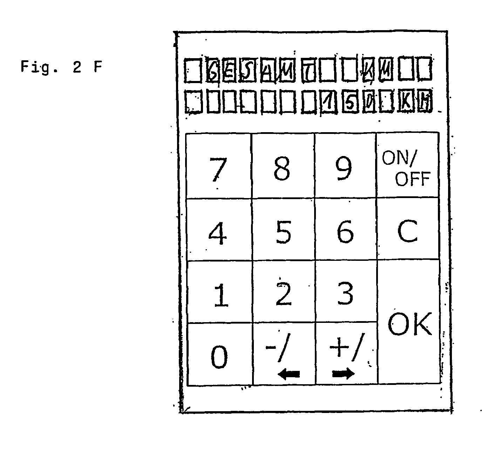

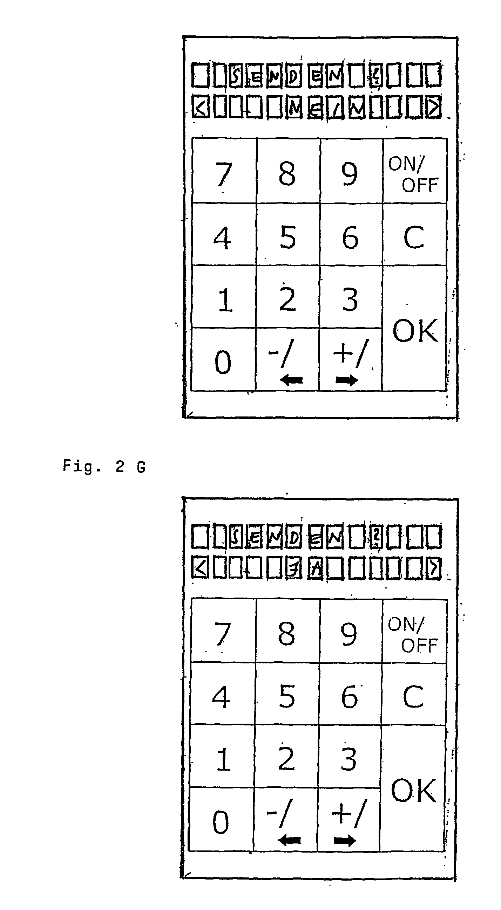

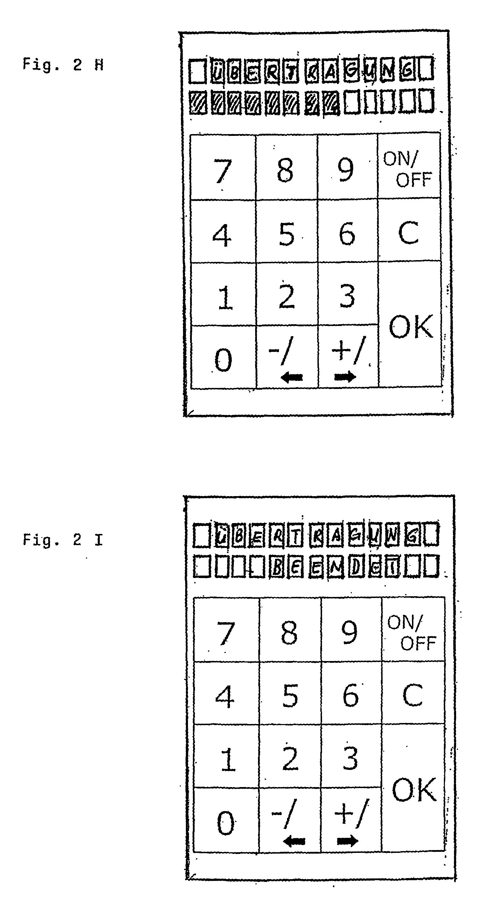

Fig. 2 I Übertragungsende

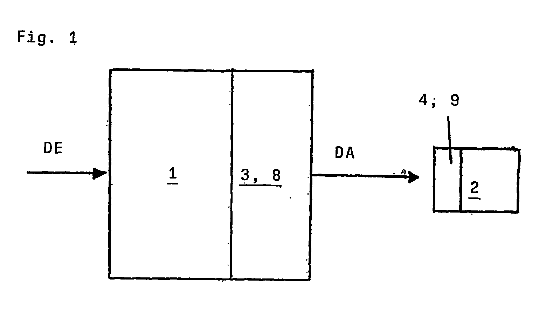

Die Fig. 1 zeigt in prinzipieller Blockschaltbildform eine allgemeine Anordnung des Systems. Mit 1 ist die Datentransfervorrichtung, mit 2 ein Fahrradcomputer bezeichnet. Die Datentransfervorrichtung 1 und der Fahrradcomputer 2 weisen jeweils Datenübertragungsmittel 3, 4 auf, die miteinander kommunizieren.

Über die in Fig. 2 dargestellten Eingabemittel 5 und Auswahlmittel 6 der Datentransfervorrichtung 1 werden Daten gemäß dem in Fig. 1 gezeigten Pfeil DE in die Datentransfervorrichtung eingegeben.

Die Datentransfervorrichtung enthält eine hier nicht dargestellte Datenverarbeitungseinrichtung zum Sammeln von Daten (Pfeil DE) gemäß Auswahl einer Funktion entsprechend einem bestimmten Kriterium und Eingabe eines Wertes.

Des weiteren verfügt die Datentransfervorrichtung über eine in Fig. 2 gezeigte Anzeigeeinrichtung 7.

Bei dem vorliegenden Ausführungsbeispiel ist das Datenübertragungsmittel 3 der Datentransfervorrichtung 1 als Sender 8 und das Datenübertragungsmittel 4 des Fahrradcomputers 2 als Empfänger 9 ausgebildet. Die Daten werden gemäß dem Pfeil DA vom Sender 8 zum Empfänger 9 gesendet. Auf diese Weise wird der Fahrradcomputer 2 mit den nutzerrelevanten Daten versorgt, ohne dass am Fahrradcomputer 2 selbst Handhabungen vorzunehmen sind.

Die Datenverarbeitungseinrichtung der Datentransfervorrichtung 1 enthält in ihrem Speicher Daten zu verschiedenen Typen von Fahrradcomputern 2. In Fig. 2A ist gezeigt, dass die Datenverarbeitungseinrichtung über die Eingabemittel 5 hinsichtlich der Auswahl des jeweiligen Fahrradcomputer 2 programmierbar ist. Aus der Fahrradcomputertypprogrammierung folgt, dass auch die für den jeweiligen Fahrradcomputertypen zutreffenden Übertragungsmittel 3 programmierbar sind. Im vorliegenden Ausführungsbeispiel wird mit der Eingabe des Fahrradcomputertyps der Sender 8 programmiert.

Aus den Fig. 2A bis 2I geht hervor, dass die Auswahlmittel 6 der Datentransfervorrichtung 1 programmierbare Funktionen gemäß bestimmten Kriterien umfassen. Bei Fig. 2B erfolgt die Auswahl gemäß dem Kriterium der Längenmesseinheit. Hier wird nach Nutzerwunsch entschieden, ob die Geschwindigkeit in Kilometer pro Stunde oder in Meilen pro Stunde angegeben werden soll. Fig. 2 C zeigt, dass das Kriterium der Radgröße über die Eingabemittel entsprechend der vom Nutzer verwendeten Radgröße in die Datentransfervorrichtung 1 eingegeben werden kann. Das Kriterium der Uhrzeit ist gemäß Fig. 2D programmierbar. Bei dem hier gezeigten Ausführungsbeispiel besteht zusätzlich die Möglichkeit, das Kriterium einer Selbstauswahlfunktion (AUTO MODE) zu programmieren. In Fig. 2 E sind jeweils der aktivierte AN-Zustand und der deaktivierte AUS-Zustand gezeigt. Schließlich existiert noch die Möglichkeit, eine Eingabe von Daten hinsichtlich des Kriteriums eines bereits erreichten Kilometerstandes bezüglich einer zurückgelegten Wegstrecke vorzunehmen. Im vorliegenden Ausführungsbeispiel hat der Sportler bereits 150 km zurückgelegt und diesen Betrag gemäß Fig. 2 F in die Datentransfervorrichtung 1 eingegeben.

Wenn alle Daten gemäß den verschiedenen Kriterien eingegeben oder ausgewählt sind, besteht des weiteren die Auswahlfunktion hinsichtlich des Absendens der Daten gemäß Pfeil DA in Fig. 1 zum Fahrradcomputer 2. Ist bspw. ein Fehler unterlaufen, kann gemäß Fig. 2 G "NEIN" gewählt werden. Ist die Eingabe perfekt, kann "JA" gewählt werden, um den Datentransfer nunmehr in Gang zu bringen.

Die Anzeigeeinrichtung 7 der Datentransfervorrichtung 1 zeigt nunmehr entsprechend der Vorgabe durch die Datenverarbeitungseinrichtung Informationen zur Datenübertragung an. Bei Fig. 2 H ist der Übertragungsfortschritt gezeigt. Hier ist etwas mehr als die Hälfte der Datenmenge bereits übertragen. Bei Fig. 2 I ist der Transfervorgang beendet.

Die Programmierung der Daten für die Auswahlmittel 6 gemäß bestimmten Kriterien erfolgt über die Eingabemittel 5.

Zu den Eingabemitteln 5 gehören die Zifferntasten 10 für die Zahlenwerte [0] bis [9] zur Eingabe der Radgröße und des bereits vorhandenen Kilometerstandes sowie der Uhrzeit. Des weiteren umfassen die Eingabemittel 5 Navigationstasten 11, mit denen einerseits die Auswahlmittel 6 im Menü der Anzeigeneinrichtung 7 aufgerufen werden können, andererseits aber auch Werte / Daten / Befehle ausgewählt werden können.

Schließlich umfassen die Eingabemittel 5 eine An- und Ausschalttaste 12, eine Korrekturtaste 13 zur Fehlerkorrektur und eine Bestätigungstaste 14, mit der die jeweilige Eingabe oder Auswahl bestätigt wird. Mittels der Bestätigungstaste 14 ist die Einspeisung der nutzerrelevanten Daten in die Datenverarbeitungseinrichtung abschließbar und der Sender 8 ist aktivierbar.

Im vorliegenden Ausführungsbeispiel wird mit der Aktivierung des Senders 8 der Datentransfervorrichtung 1 gleichzeitig der Empfänger 9 des Fahrradcomputers 2 mitaktiviert.

Wenn die hier manuell eingegebenen Daten beim Empfänger 9 des Fahrradcomputers 2 angekommen sind, erfolgt dort ein internes Verarbeiten und Anzeigen der eingestellten aktualisierten Daten.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf das voranstehend erörterte Ausführungsbeispiel eingeschränkt ist. Vielmehr ist eine nichtmanuelle Dateneingabe in die Datentransfervorrichtung und die Bereitstellung anderweitiger Kriterien, Auswahlmöglichkeiten und Funktionen möglich. Auch eine vorbereitete Variante der Datentransfervorrichtung ist möglich, die bereits sämtliche möglichen den Computertypen für Fahrräder, Inliner und Wanderstöcke sowie diverse gängige Rad- und Rollengrößen betreffenden Daten sowie die Uhrzeit per Funkübertragung bereits enthält. Schließlich kann das Grundprinzip der Datentransfervorrichtung auch für Computer angewendet werden, die in Form einer Pulsuhr vorliegen und der Datentransfer kann bezüglich Leistungsdaten eines Sportlers stattfinden, die körperbezogen bzw. physisch sind.

**Bezugszeichenliste**

| | |
|---|---|
| 1 | Datentransfervorrichtung |
| 2 | Fahrradcomputer |
| 3 | Datenübertragungsmittel |
| 4 | Datenübertragungsmittel |
| 5 | Eingabemittel |
| 6 | Auswahlmittel |
| 7 | Anzeigeeinrichtung |
| 8 | Sender |
| 9 | Empfänger |
| 10 | Zifferntaste |
| 11 | Navigationstaste |
| 12 | AN / AUS-Taste |
| 13 | Korrekturtaste |
| 14 | Bestätigungstaste |
| | |
| | |
| | |
| DE | Pfeil für Dateneingabe |
| DA | Pfeil für Datenausgabe |

## Patentansprüche

1. Datentransfervorrichtung für einen Fahrradcomputer, Inlinercomputer, Wanderstockcomputer oder Pulsuhrcomputer, umfassend:
- Datenübertragungsmittel (3),
- eine Datenverarbeitungseinrichtung zum Sammeln von Daten gemäß Auswahl einer Funktion entsprechend einem bestimmten Kriterium und Eingabe eines Wertes,
- Eingabemittel (5),
- Auswahlmittel (6) und
- eine Anzeigeeinrichtung.(7),
**dadurch gekennzeichnet,**
**dass** die Datenverarbeitungseinrichtung über einen Speicher verfügt, der Daten zu verschiedenen Typen von Fahrradcomputern (2), Inlinercomputern, Wanderstockcomputern oder Pulsuhrcomputern enthält und dass die Datenverarbeitungseinrichtung über die Eingabemittel (5) zur Auswahl des für den jeweiligen Computertypen zutreffenden Übertragurigsmittels (3) programmierbar ist.

2. Datentransfervorrichtung nach Anspruch 1, **dadurch gekennzeichnet, dass** das Datenübertragungsmittel in Form von zwei metallischen Steckkontakten ausgebildet ist, die mit den entsprechenden Kontakten des Fahrradcomputers, Inlinercomputers, Wanderstockcomputers oder Pulsuhrcomputers zusammenwirken.

3. Datentransfervorrichtung nach Anspruch 1, **dadurch gekennzeichnet, dass** das Datenübertragungsmittel (3), als Sender (8) vorliegt und die Daten an einen entsprechenden Empfänger (9) des Datenübertragungsmittel (4) des Fahrradcomputers (2), Inlinercomputers, Wanderstockcomputers oder Pulsuhrcömputers sendet.

4. Datentransfervorrichtung nach einem der Ansprüche 1 bis 3, **dadurch gekennzeichnet, dass** die Auswahlmittel (6) programmierbare Funktionen gemäß bestimmten Kriterien umfassen.

5. Datentransfervorrichtung nach einem der Ansprüche 1 bis 4, **dadurch gekennzeichnet, dass** es sich bei den Kriterien um die Uhrzeit und / oder um die Sprache auf der Anzeigeeinrichtung (7) handelt.

6. Datentransfervorrichtung nach einem der Ansprüche 1 bis 4, **dadurch gekennzeichnet, dass** es sich bei einem Kriterium um die Wegstreckenmesseinheit handelt.

7. Datentransfervorrichtung nach Anspruch 6, **dadurch gekennzeichnet, dass** die Wegstreckenmesseinheit in Kilometern oder Meilen einstellbar ist.

8. Datentransfervorrichtung nach einem der Ansprüche 1 bis 4 oder 6 oder 7, **dadurch gekennzeichnet, dass** es sich bei einem Kriterium um einen bereits erreichten Stand bezüglich einer zurückgelegten Wegstrecke handelt.

9. Datentransfervorrichtung nach einem der Ansprüche 1 bis 4 oder 6 bis 8, **dadurch gekennzeichnet, dass** es sich bei einem Kriterium um ein bereits erreichtes Zeitvolumen an sportlicher Betätigung handelt.

10. Datentransfervorrichtung nach einem der Ansprüche 1 bis 4 oder 6 bis 9, **dadurch gekennzeichnet, dass** es sich bei einem Kriterium für Fahrradcomputer oder Inlinercomputer um die Radgröße oder Rollengröße handelt.

11. Datentransfervorrichtung nach einem der Ansprüche 1 bis 10, **dadurch gekennzeichnet, dass** die Auswahlmittel (6) über die Eingabemittel (5) programmierbar sind.

12. Datentransfervorrichtung nach einem der Ansprüche 1 bis 11, **dadurch gekennzeichnet, dass** die Eingabemittel (5) Zifferntasten (10), insbesondere zur Eingabe von Werten, sowie Navigationstasten (11), insbesondere im Hinblick auf die Auswahlmittel (6) mit verschiedenen Funktionen und die Auswahl dortiger Werte, umfassen.

13. Datentransfervorrichtung nach Anspruch 12, **dadurch gekennzeichnet, dass** die Eingabemittel (5) eine An- und Ausschalttaste (12), eine Korrekturtaste (13) und eine Bestätigungstaste (14) hinsichtlich Eingabe oder Auswahl umfassen.

14. Datentransfervorrichtung nach Anspruch 13, **dadurch gekennzeichnet, dass** mittels der Bestätigungstaste (14) die Einspeisung der nutzerrelevanten Daten in die Datenverarbeitungseinrichtung abschließbar ist und zumindest die Datenübertragungsmittel (3) aktivierbar sind.

15. Datentransfervorrichtung nach Anspruch 14, **dadurch gekennzeichnet, dass** mittels der Bestätigungstaste (14) sowohl die Datenübertragungsmittel (3) der Datentransfervorrichtung (1) als auch die Datenübertragungsmittel (4) des Fahrradcomputers (2), Inlinercomputers, Wanderstockcomputers oder Pulsuhrcomputers aktivierbar sind.

16. Computer für Fahrrad, Inliner, Wanderstock oder Pulsuhr zur Ermittlung der Leistungsdaten, eines Sportlers mit einer Messeinrichtung, einer Datenverarbeitungseinrichtung, einer Anzeigeeinrichtung,
**dadurch gekennzeichnet,**
**dass** Datenübertragungsmittel (4) vorgesehen sind, die mit den Datenübertragungsmitteln (3) der Datentransfervorrichtung (1) gemäß einem der Ansprüche 1 bis 15 zusammenwirken und dass eine Kennung bzgl. des Computertyps vorgesehen ist, die von der Datentransfervorrichtung erkennbar ist und die Qualifizierung des Computertyps innerhalb des Speichers der Datenverarbeitungseinrichtung der Datentransfervorrichtung automatisch einleitet.

17. Computer nach Anspruch 16, **dadurch gekennzeichnet, dass** Datenübertragungsmittel (4) einen Empfänger (8), ggf. auch einen Sender, umfassen, oder in Form von Kontaktstiften vorliegen.

18. Computer nach einem der. Ansprüche 16 oder 17, **dadurch gekennzeichnet, dass** der Computer innerhalb einer Pulsuhr vorgesehen ist und dass die Leistungsdaten körperliche Leistungsdaten eines Sportlers betreffen.

19. Verfahren zur Einstellung und/oder Aktualisierung eines Fahrradcomputers, Inlinercomputers, Wanderstockcomputers oder Pulsuhrcomputers, das die folgenden Schritte umfasst:
- Vorsehen einer Datentransfervorrichtung nach einem der Ansprüche 1 bis 15,
- Auswahl von Funktionen und Eingabe von Werten gemäß Nutzerkriterien,
- Auslösen der Datenübertragung von der Datentransfervorrichtung zum Fahrradcomputer, Inlinercomputer, Wanderstockcomputer oder Pulsuhrcomputer gemäß einem der Ansprüche 16 bis 18,
- Empfangen, internes Verarbeiten und Anzeigen der eingestellten und / oder aktualisierten Daten auf dem Fahrradcomputer, Inlinercomputer, Wanderstockcomputer oder Pulsuhrcomputer.

20. Verfahren nach Anspruch 19, **dadurch gekennzeichnet, dass** über die Datentransfervorrichtung Daten eines bereits benutzten Fahrradcomputers, Inlinercomputers, Wanderstockcomputers oder Pulsuhrcomputers entnommen werden und an einen anderen Fahrradcomputer, Inlinercomputer, Wanderstockcomputer oder Pulsuhrcomputer übermittelt werden.

## Claims

1. A data transfer device for a bicycle computer, in-line skate computer, hiking pole computer or heart rate monitor computer, comprising
- data transmission means (3),
- a data processing device for collecting data by selecting a function that corresponds to a certain criterion and inputting a value,
- input means (5),
- selection means (6) and
- a display device (7),
**characterized in**
**that** the data processing device features a memory that contains data on different types of bicycle computers (2), in-line skate computers, hiking pole computers or heart rate monitor computers, and in that the data processing device can be programmed for selecting the applicable transmission means (3) for the respective type of computer with the aid of the input means (5).

2. The data transfer device according to Claim 1, **characterized in that** the data transmission means is realized in the form of two metallic plug-in contacts that cooperate with the corresponding contacts of the bicycle computer, in-line skate computer, hiking pole computer or heart rate monitor computer.

3. The data transfer device according to Claim 1, **characterized in that** the data transmission means (3) is a transmitter (8) and transmits the data to a corresponding receiver (9) of the data transmission means (4) of the bicycle computer (2), in-line skate computer, hiking pole computer or heart rate monitor computer.

4. The data transfer device according to one of Claims 1 to 3, **characterized in that** the selection means (6) comprises programmable functions that correspond to certain criteria.

5. The data transfer device according to one of Claims 1 to 4, **characterized in that** the criteria consist of the time of day and/or the language on the display device (7).

6. The data transfer device according to one of Claims 1 to 4, **characterized in that** one criterion consists of the unit of measurement of the distance.

7. The data transfer device according to Claim 6, **characterized in that** the unit of measurement of the distance can be set to kilometers or miles.

8. The data transfer device according to one of Claims 1 to 4 or 6 or 7, **characterized in that** one criterion consists of the distance already traveled.

9. The data transfer device according to one of Claims 1 to 4 or 6 to 8, **characterized in that** one criterion consists of the length of time that was already spent performing athletic activity.

10. The data transfer device according to one of Claims 1 to 4 or 6 to 9, **characterized in that** one criterion for a bicycle computers or in-line skate computers consists of the wheel size or roller size.

11. The data transfer device according to one of Claims 1 to 10, **characterized in that** the selection means (6) can be programmed with the aid of the input means (5).

12. The data transfer device according to one of Claims 1 to 11, **characterized in that** the input means (5) comprises numerical keys (10), particularly for inputting values, as well as navigation keys (11), particularly with respect to the selection means (6) with different functions and the selection of values thereon.

13. The data transfer device according to Claim 12, **characterized in that** the input means (5) comprises an on- and off-key (12), a correction key (13) and a confirmation key (14) for inputs or selections.

14. The data transfer device according to Claim 13, **characterized in that** the input of user-relevant data into the data processing device can be concluded and at least the data transmission means (3) can be activated by means of the confirmation key (14).

15. The data transfer device according to Claim 14, **characterized in that** the data transmission means (3) of the data transfer device (1), as well as the data transmission means (4) of the bicycle computer (2), in-line skate computer, hiking pole computer or heart rate monitor computer, can be activated by means of the confirmation key (14).

16. A computer for bicycles, in-line skates, hiking poles or heart rate monitors that serves for determining performance data of an athlete, comprising a measuring device, a data processing device and a display device,
**characterized in**
**that** data transmission means (4) are provided that cooperate with the data transmission means (3) of the data transfer device (1) according to one of Claims 1 to 15, and in that identifying information with respect to the computer type is provided, wherein this identifying information can be recognized by the data transfer device and automatically initiates the qualification of the computer type within the memory of the data processing device of the data transfer device.

17. The computer according to Claim 16, **characterized in that** the data transmission means (4) comprises a receiver (8) and, if applicable, a transmitter or is realized in the form of contact pins.

18. The computer according to one of Claims 16 or 17, **characterized in that** the computer is arranged within a heart rate monitor and the performance data pertains to the physical performance data of an athlete.

19. A method for initializing and/or updating a bicycle computer, in-line skate computer, hiking pole computer or heart rate monitor computer comprising the following steps:
- providing a data transfer device according to one of Claims 1 to 15,
- selecting functions and inputting values in accordance with user criteria,
- activating the data transmission from the data transfer device to the bicycle computer, in-line skate computer, hiking pole computer or heart rate monitor computer in accordance with one of Claims 16 to 18, and
- receiving, internally processing and displaying the initialized in/or updated data on the bicycle computer, in-line skate computer, hiking pole computer or heart rate monitor computer.

20. The method according to Claim 19, **characterized in that** data of an already used bicycle computer, in-line skate computer, hiking pole computer or heart rate monitor computer can be retrieved by means of the data transfer device and transmitted to another bicycle computer, in-line skate computer, hiking pole computer or heart rate monitor computer.

## Revendications

1. Dispositif de transfert de données pour un ordinateur de vélo, un ordinateur Inliner, un ordinateur de bâton de randonnée ou ordinateur de montre à impulsions, comprenant .
- des moyens de transmission de données (3),
- un dispositif de traitement de données pour la collecte de données selon le choix d'une fonction conformément à un critère défini et entré d'une valeur,
- des moyens d'entrée (5),
- des moyens de sélection (6) et
- un dispositif d'affichage (7),
**caractérisé en ce que**
le dispositif de traitement de données dispose d'une mémoire qui contient des données concernant différents types d'ordinateurs de vélo (2), d'ordinateurs Inliner, d'ordinateurs de bâton de randonnée ou d'ordinateurs de montre à impulsions et **en ce que** le dispositif de traitement de données peut être programmé par les moyens d'entrée (5) pour la sélection du moyen de transmission (3) concerné pour les types d'ordinateur spécifiques.

2. Dispositif de transfert de données selon la revendication 1, **caractérisé en ce que** le moyen de transmission de données est réalisé sous la forme de deux contacts enfichables métalliques, qui coopèrent avec les contacts correspondants de l'ordinateur de vélo, de l'ordinateur Inliner, de l'ordinateur de bâton de randonnée ou de l'ordinateur de montre à impulsions.

3. Dispositif de transfert de données selon la revendication 1, **caractérisé en ce que** le moyen de transmission de données (3) est réalisé sous forme d'émetteur (8) et envoie les données à un récepteur (9) correspondant du moyen de transmission de données (4) de l'ordinateur de vélo (2), de l'ordinateur Inliner, de l'ordinateur de bâton de randonnée ou de l'ordinateur de montre à impulsions.

4. Dispositif de transfert de données selon l'une quelconque des revendications 1 à 3, **caractérisé en ce que** les moyens de sélection (6) comprennent des fonctions programmables selon des critères définis.

5. Dispositif de transfert de données selon l'une quelconque des revendications 1 à 4, **caractérisé en ce que**, en ce qui concerne les critères, il s'agit de l'heure et/ou de la langue sur le dispositif d'affichage (7).

6. Dispositif de transfert de données selon l'une quelconque des revendications 1 à 4, **caractérisé en ce que**, en ce qui concerne un critère, il s'agit de l'unité de mesure de tronçon de déplacement.

7. Dispositif de transfert de données selon la revendication 6, **caractérisé en ce que** l'unité de mesure de tronçon de déplacement peut être réglée en kilomètres ou en miles.

8. Dispositif de transfert de données selon l'une quelconque des revendications 1 à 4 ou 6 ou 7, **caractérisé en ce que**, en ce qui concerne un critère il s'agit d'une indication déjà atteinte concernant un tronçon de déplacement parcouru.

9. Dispositif de transfert de données selon l'une quelconque des revendications 1 à 4 ou 6 à 8, **caractérisé en ce que**, en ce qui concerne un critère, il s'agit d'un volume de temps déjà atteint concernant une activité sportive.

10. Dispositif de transfert de données selon l'une quelconque des revendications 1 à 4 ou 6 à 9, **caractérisé en ce que**, en ce qui concerne un critère pour l'ordinateur de vélo ou l'ordinateur Inliner, il s'agit de la grandeur de roue ou d'une grandeur de rouleau.

11. Dispositif de transfert de données selon l'une quelconque des revendications 1 à 10, **caractérisé en ce que** les moyens de sélection (6) peuvent être programmés par les moyens d'entrée (5).

12. Dispositif de transfert de données selon l'une quelconque des revendications 1 à 11, **caractérisé en ce que** les moyens d'entrée (5) comportent des touches numériques (10), en particulier pour l'entrée de valeurs, ainsi que des touches de navigation (11), en particulier en ce qui concerne les moyens de sélection (6) avec différentes fonctions et le choix de telles valeurs.

13. Dispositif de transfert de données selon la revendication 12, **caractérisé en ce que** les moyens d'entrée (5) comprennent une touche de commutation et de déconnexion (12), une touche de correction (13) et une touche de confirmation (14) en ce qui concerne l'entrée ou la sélection.

14. Dispositif de transfert de données selon la revendication 13, **caractérisé en ce que** l'injection des données importantes au niveau de l'utilisateur dans le dispositif de traitement de données peut être verrouillée au moyen de la touche de confirmation (14) et au moins les moyens de transmission de données (3) peuvent être activés.

15. Dispositif de transfert de données selon la revendication 14, **caractérisé en ce que** aussi bien les moyens de transmission de données (3) du dispositif de transfert de données (1) que les moyens de transmission de données (4) de l'ordinateur de vélo (2), de l'ordinateur Inliner, de l'ordinateur de bâton de randonnée ou de l'ordinateur de montre à impulsions peuvent être activés au moyen de la touche de confirmation (14).

16. Ordinateur pour vélo, Inliner, bâton de randonnée ou montre à impulsions pour déterminer les données de performance d'un sportif comprenant un dispositif de mesure, un dispositif de traitement de données, un dispositif d'affichage,
**caractérisé en ce que**
il est prévu des moyens de transmission de données (4) qui coopèrent avec les moyens de transmission de données (3) du dispositif de transfert de données (1) selon l'une quelconque des revendications 1 à 15 et **en ce qu'**il est prévu un code concernant le modèle d'ordinateur qui peut être identifié par le dispositif de transfert de données et enclenche automatiquement la qualification du type d'ordinateur à l'intérieur de la mémoire du dispositif de traitement de données, du dispositif de transfert de données.

17. Ordinateur selon la revendication 16, **caractérisé en ce que** des moyens de transmission de données (4) comportent un récepteur (8) éventuellement également un émetteur, ou sont présents sous forme de broches à contact .

18. Ordinateur selon l'une quelconque des revendications 16 ou 17, **caractérisé en ce que** l'ordinateur est prévu à l'intérieur d'une montre à impulsions et **en ce que** les données de performances concernent des performances physiques d'un sportif.

19. Procédé pour régler et/ou actualiser un ordinateur de vélo, un ordinateur Inliner, un ordinateur de canne de randonnée ou un ordinateur de montre à impulsions, qui comporte les étapes suivantes :
- prévision d'un dispositif de transfert de données selon l'une quelconque des revendications 1 à 15,
- sélection de fonctions et entrée de valeurs selon des critères d'utilisateur,
- déclenchement de la transmission de données du dispositif de transfert de données à l'ordinateur de vélo, l'ordinateur Inliner, l'ordinateur de bâton de randonnée ou l'ordinateur de montre à impulsions selon l'une quelconque des revendications 16 à 18,
- réception, traitement interne et affichage des données réglées et/ou actualisées sur l'ordinateur de vélo, l'ordinateur Inliner, l'ordinateur de canne de randonnée ou l'ordinateur de montre à impulsions.

20. Procédé selon la revendication 19, **caractérisé en ce que** des données d'un ordinateur de vélo, ordinateur Inliner, ordinateur de bâton de randonnée ou ordinateur de montre à impulsions déjà utilisé sont prélevées par le dispositif de transfert de données et sont transmises à un ordinateur de vélo, ordinateur Inliner, ordinateur de canne de randonnée ou ordinateur de montre à impulsions.
